# EUROPEAN PATENT SPECIFICATION

(11) **EP 3 044 036 B1**
(45) Date of publication and mention of the grant of the patent: **31.05.2017**
(21) Application number: 14790335.5
(22) Date of filing: 12.09.2014
(51) Int. Cl.: B60N 2/01, B60N 2/14, B60N 2/42, B60N 2/06, B60N 2/015, B60N 2/44, B60N 2/427, B60R 22/12, B60R 21/207, B60N 2/02

(54) **VEHICLE SEATING AND METHODS AND VEHICLES USING THE SAME**
FAHRZEUGSITZ, VERFAHREN UND FAHRZEUGE DAMIT
SIÈGES DE VÉHICULES ET PROCÉDÉS ET VÉHICULES LES UTILISANT

(30) Priority: 12.09.2013 US 201361876946 P
(43) Date of publication of application: 20.07.2016
(73) Proprietor: SABIC Global Technologies B.V., 4612 PX Bergen op Zoom (NL)
(72) Inventor: DESHMUKH, Bhushan, Bangalore 562125 (IN)
(74) Representative: Balder IP Law, S.L.
(86) International application number: PCT/IB2014/064471
(87) International publication number: WO 2015/036973

(56) References cited:
- WO-A1-00/74978
- WO-A1-2005/108150
- WO-A1-2013/008999
- FR-A1- 2 725 669
- FR-A1- 2 845 954
- JP-A- 2007 106 321
- US-B1- 6 648 393

## Description

### TECHNICAL FIELD

The present application relates to a vehicle seating layout, and specifically relates to a seating layout that includes hanging seats.

### BACKGROUND

Automotive interior design has remained the same for many years. The arrangement includes seats affixed at the bottom to the chassis facing forward (i.e., the direction in which the vehicle will travel). In other vehicles, such as subways, trains, and the like, some seats may face sideways or toward the back, but all are affixed to the chassis at their base.

FR 2 845 954 A1 discloses a seat articulated to the vehicle floor via couplings in the form of hooks fixed on plates which are integral with a base secured to the floor of the vehicle body. FR 2 725 669 A1, which is regarded as the closest prior art, is directed at a retractable seat having a mobile back supported by connecting rods which are linked at their extremities so as to pivot around transverse axes carried by the seat and by a primary element of the vehicle structure, respectively.

What is needed in the art is a seating design that enables greater flexibility within the vehicle.

### SUMMARY

The invention is defined by the technical features set forth in independent product claim 1 and method claim 15, with additional features thereof to be found in the dependent claims; disclosed herein are seats configured to attach to the roof of the vehicle, vehicles comprising the same, and methods of using the same.

In an embodiment, a vehicle seat comprises: a base; a back connected to the base; an arm extending from the base; wherein the arm is configured to attach to a roof rail of a vehicle.

In an embodiment, a vehicle, comprises: a steering column; engine; a roof comprising a rail; and passenger compartment, wherein the passenger compartment comprises the vehicle seat, wherein the arm is attached to the rail. The vehicle seat comprises a base, a back connected to the base, and an arm extending from the base.

In an embodiment, a method of arranging seating in a vehicle comprises: sliding an arm of the vehicle seat horizontally along a slot in a roof rail and/or crossrail. The vehicle seat comprises a base, a back connected to the base, and an arm extending from the base.

These and other features are more particularly described below.

### BRIEF SUMMARY OF THE DRAWINGS

The following is a brief description of the drawings wherein like elements are numbered alike and which are presented for the purposes of illustrating the exemplary embodiments disclosed herein and not for the purposes of limiting the same.
FIG 1. is a cross-sectional partial view of an embodiment of hanging seats attached to a roof.
FIG. 2 is an overhead view of an embodiment of a vehicle illustrating possible movements of the seats therein.
FIG. 3 is a partial perspective view of an embodiment of a vehicle illustrating the movement of seats.
FIG. 4 is a series of overhead views illustrating various embodiments of the seats movements, including stacking of the seats to form free space (illustrations 1 - 4), forward and backward movement of the seat, e.g., to create space or to reduce collision impact (illustration 5), and rotation of the seats, e.g., to enable facile egress and ingress (illustration 6).
FIG. 5 is a partial perspective view illustrating an embodiment of stacked seats and free space.
FIG. 6 is a partial perspective view illustrating an embodiment of an egress scenario from a vehicle.
FIG. 7 is a partial perspective view illustrating an embodiment of a social flexibility scenario from a vehicle.

### DETAILED DESCRIPTION

Automotive interior space has been very much conventional from its beginning. Automotive interior design has remained the same for many years. Almost all of today's cars use conventional seating arrangement that is two rows of seats which are fixed to the chassis allowing its back to recline forward or backward. In cars, seats are essentially fixed to the chassis at their base and hence there is very limited scope for reconfiguration, e.g., to optimize the space according to the use scenario. For example, with a single passenger, the driver, in the car with a lot of luggage. The driver could be short of space and unable to manipulate the vehicle so as to optimize the available interior space even if he's traveling alone. Additionally, current seating layout in cars does not facilitate sociopetal arrangement.

In the present design, seats are hung from the roof frames of the vehicle. Optionally, these seats can be slid along the rails. This seating layout offers a wide range of flexibility to the user depending upon the use scenario. In this hanging seat concept, a user can change the interior layout according to the situation, thereby allowing greater flexibility within the same interior space. A further option comprises the seats being configured to slide backwards during a frontal impact collision along the rails. During crash of vehicle (frontal impact), sliding of seats backward can minimize the impact, prevent intrusion damage, and enhance the safety aspect. Optionally, the seat base and/or arm can further comprise safety features that can be actuated to provide stability during an impact.

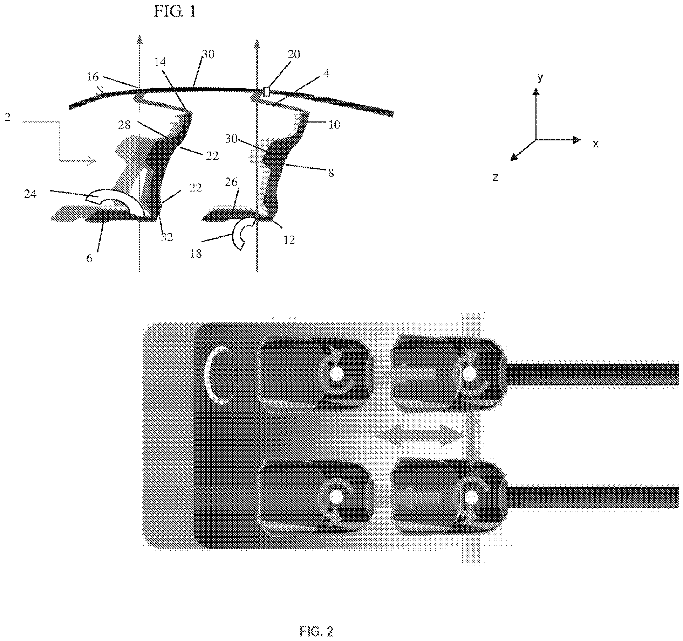

Referring to FIG. 1, the seat 2 has a base 6 connected to a back 8, with an arm 4 extending from the back 8 and configured to attach the seat 2 to a vehicle roof 30. The seat 2 can be rigid, e.g., with base 6 and back 8 a single unit, or can be flexible, wherein a base hinge 12 connects the base 6 and back 8, enabling the angle of the base to be changed with respect to the back (e.g., pivoted upward against the back 8). Optionally a clip, lock, or other mechanism can retain the base 6 in the folded position against the back 8. Similarly, a back hinge 14 can connect the back 8 and arm 4 such that the back 8 can move with respect to the arm 4. Optionally, the back hinge 14 can allow a change in angle between the arm 4 and the back 8 to enable reclining or inclining, and/or to allow the seat to pivot around the arm 4.

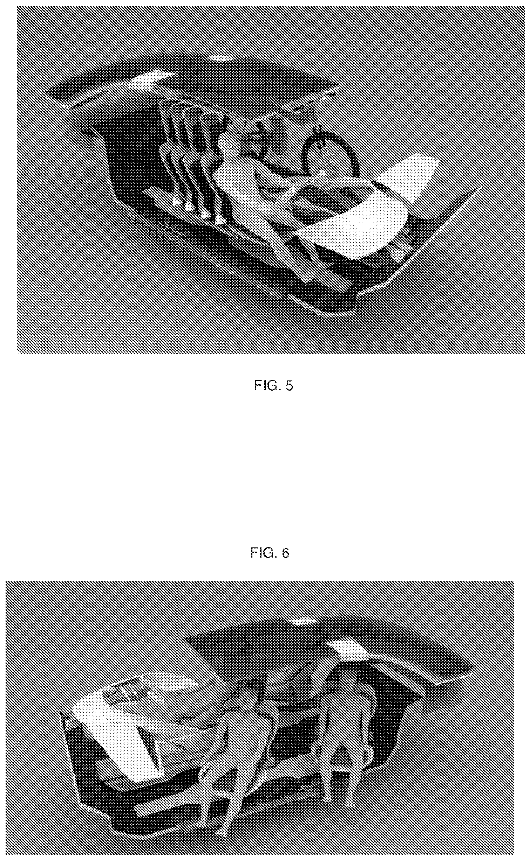

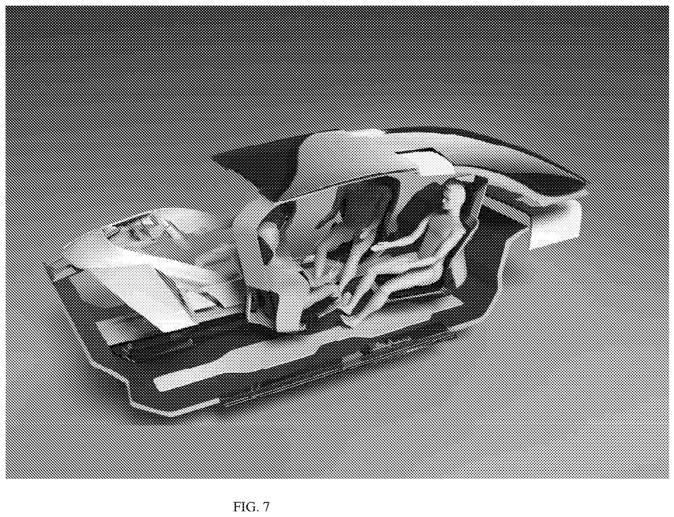

Pivoting of the seat 2 can be accomplished at the connection of the arm 4 to the roof rail 32,36, e.g., using a seat revolving hinge 16 (see also FIG. 2). The seat 2 can be configured to pivot around the x axis, and/or to slide along slot(s) 34 to enable sliding along the x axis. Enabling sliding of the seats 2 allows the seats 2 to be gathered together (e.g., stacked; see FIG. 5). Similarly, enabling pivoting along the vertical axis (e.g., the y axis) allows rotation, e.g., easy ingress and egress from the vehicle (see FIG. 6), and/or social flexibility (e.g., FIG. 7) or for the installation of a rear facing infant seat in a location more visible to the driver. In FIG. 6, the egress scenario from the vehicle is illustrated wherein users can turn the seats and simply get out from the vehicle with ease. This is very useful especially for the elderly and disabled people. In FIG. 7, an interactive layout is illustrated wherein as a seat can be swiveled around the connection between the arm and the roof, people inside the vehicle can arrange a configuration that facilitates an interactive space environment with ease.

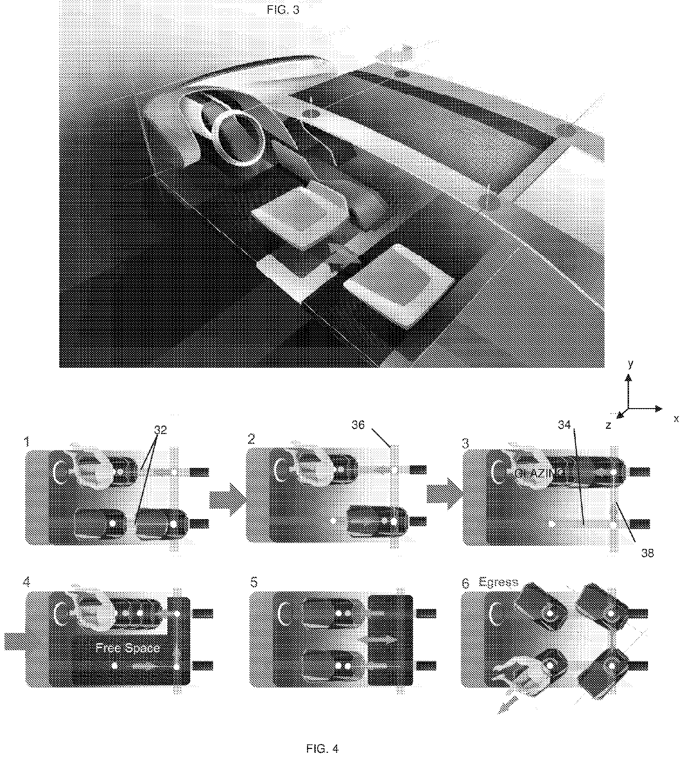

As illustrated in the views shown in FIG. 4, seats are hung from the frame(s) on the roof (e.g., two rails) which support a panoramic roof as well. There can be additional rail(s), cross rail(s) 36, extending between the main rails 32. The cross rail(s) 36, comprising cross slot(s) 38, enable the seats to slide sideways, between main rails 32. As used herein, main rails extend in an x direction, e.g., from the front to the back of the vehicle. As used herein, cross rails extend in a y direction, between the sides of the vehicle (e.g., driver's side and passenger's side).

This design can further enhance safety. For example, during a frontal crash impact, the seats can slide on the frame (rails) and move backward. This movement is in the direction of force, hence minimizing the impact. Optionally, the seat base 6 can have base safety feature 18 (see FIG. 1). For example the base safety feature 18 can comprise a braking mechanism that creates friction as the seat moves during an impact to reduce and/or control the speed of the movement, and/or to transfer energy from the seat to the chassis of the vehicle. Alternatively, or in addition, the base safety feature 18 can provide stability to the seat. The safety features could include an actuation member (e.g., 18) such as cylinder arm, telescopic arm, spring, or a combination comprising at least one of the foregoing. The actuation can be hydraulic, pneumatic, mechanical, or a combination comprising at least one of the foregoing. For example, the actuation member could actuate to engage an anchor fixedly attached to the chassis of the vehicle.

The arm safety feature 20, as with the base safety feature 18, can also optionally provide controlled deceleration of the seat during impact, and/or controls the speed of the seat movement, and/or be designed to transfer energy from the seat to the roof rails of the vehicle.

Other safety features of the seat can include seat belt(s) 32 and/or airbag(s) 22. The seat belt 32 can be a standard shoulder and lap belt, a harness (e.g., a five-point harness), and/or a convertible seat belt that can be converted from a shoulder and lap belt to a harness. The airbag(s) 22 can, for example, be located in the back 8 and/or base 6 of the seat 2. These airbag(s) can be designed and located to protect passengers seated behind the seat (e.g., in another seat), such as for head protection and/or leg protection, and/or can be designed and located so as to provide energy absorption during a collision for the occupant of the seat.

The seats 2 can further optionally include various comfort features, such as arm rests 22, a head rest 10 (which is optionally adjustable), base cushion 26, back cushion 28, supports 30. Possible supports 30 include head supports, shoulder supports, and so forth. Optionally, the supports 30 can be adjustable to enlarge or narrow the width of the seat back 8 to enable a larger occupant (e.g., an adult or a child's car seat) or smaller occupant (e.g., a child). Similarly, the back 8 and/or base 6 can be adjustable (e.g., telescoping), thereby enabling them to be adjusted depending upon the size of the occupant. This could even eliminate the need for child car seats, such as booster seats.

Set forth below are some embodiments of the vehicle seat as well as vehicles comprising the seat and methods of using the seat.

Embodiment 1: A vehicle seat, comprising: a base; a back connected to the base; an arm extending from the base; wherein the arm is configured to attach to a roof rail of a vehicle.

Embodiment 2: The seat of Embodiment 1, wherein the base and the back are connected with a hinge.

Embodiment 3: The seat of any of Embodiments 1 - 2, wherein the arm and the back are connected with a hinge.

Embodiment 4: The seat of any of Embodiments 1 - 3, wherein the base is free of connections that can permanently anchor the seat to a vehicle chassis.

Embodiment 5: The seat of any of Embodiments 1 - 3, wherein the base is free of connections that connect the seat to a vehicle chassis such that the seat movement is restricted by rails below the base.

Embodiment 6: The seat of any of Embodiments 1 - 3, wherein other than safety features that engage during an impact, the base is free of connections that anchor the seat to a vehicle chassis.

Embodiment 7: The seat of any of Embodiments 1 - 6, further comprising a base safety feature comprising a braking mechanism that creates friction as the seat moves during an impact.

Embodiment 8: The seat of any of Embodiments 1 - 7, further comprising a base safety feature configured to transfer energy from the seat to the chassis of the vehicle during an impact.

Embodiment 9: The seat of any of Embodiments 1 - 8, further comprising an arm safety feature that provides controlled deceleration of the seat during impact.

Embodiment 10: The seat of any of Embodiments 1 - 9, further comprising an arm safety feature that controls the speed of the seat movement during an impact.

Embodiment 11: The seat of any of Embodiments 1 - 10, further comprising an arm safety feature that transfers energy from the seat to the roof rails of the vehicle during an impact.

Embodiment 12: The seat of any of Embodiments 1 - 11, further comprising at least one of a seat belt and an airbag.

Embodiment 13: The seat of Embodiment 12, further comprising the seat belt, wherein the seat belt comprises at least one of a shoulder and lap belt, a harness, and a convertible seat belt that is convertible from a shoulder and lap belt to a harness.

Embodiment 14: The seat of any of Embodiments 12 - 13, comprising the airbag, wherein the airbag is located in at least one of the back and the base of the seat.

Embodiment 15: The seat of any of Embodiments 1 - 14, further comprising at least one of an arm rest, a head rest, a base cushion, a back cushion, and supports.

Embodiment 16: The seat of Embodiment 15, comprising the support, wherein the support is adjustable to enlarge or narrow the width of the seat back.

Embodiment 17: The seat of any of Embodiments 1 - 16, wherein at least one of the back and the base 6 are adjustable enabling them to be adjusted depending upon the size of the occupant.

Embodiment 18: The seat of any of Embodiments 1 - 17, further comprising a base safety feature, wherein the safety features comprise a cylinder arm, a telescopic arm, a spring, or a combination comprising at least one of the foregoing.

Embodiment 19: The seat of any of Embodiments 6 - 11 and 18, wherein the safety feature is hydraulic, pneumatic, mechanical, or a combination comprising at least one of the foregoing.

Embodiment 20: The seat of any of Embodiment 19, wherein the safety feature is configure to actuate to engage an anchor fixedly attached to a chassis of a vehicle.

Embodiment 21: The seat of any of Claims 1 - 17, wherein the arm has an adjustable length. For example, the arm can telescope, enabling the location of the base between the chassis and the roof to be adjusted.

Embodiment 22: A vehicle, comprising: a steering column; engine; a roof comprising a rail; and passenger compartment, wherein the passenger compartment comprises the seat of any of Embodiments 1 - 21, wherein the arm is attached to the rail.

Embodiment 23: The vehicle of Embodiment 22, wherein the seat can pivot around a vertical axis.

Embodiment 24: The vehicle of any of Embodiments 22 - 23, wherein the seat can slide horizontally.

Embodiment 25: The vehicle of any of Embodiments 22 - 24, comprising a plurality of seats, and wherein the seats can be stacked.

Embodiment 26: The vehicle of any of Embodiments 22 - 25, wherein the arm is removably attached to the rail such that the seat can be removed from the vehicle.

Embodiment 27: The vehicle of any of Embodiments 22 - 26, wherein the rail comprises a slot.

Embodiment 28: The vehicle of any of Claims 22 - 27, wherein the seat can slide across the vehicle, from one side to another side. In other words, wherein the vehicle comprise a passenger side and a driver side, and wherein the seat can slide according to at least one of from the driver side to the passenger side, from the passenger side to the driver side, and back and forth between the passenger side and the driver side.

Embodiment 29: The vehicle of any of Claims 22 - 27, wherein the seat can rotate greater than or equal to 180°.

Embodiment 30: The vehicle of any of Claims 22 - 27, wherein the vehicle has a front passenger space adjacent to a windshield, and a rear passenger space located between the front passenger space and a rear of the vehicle, and wherein the seat can slide in an x direction, from the front passenger space to the rear passenger space.

Embodiment 31: The vehicle of any of Claims 22 - 30, wherein the vehicle has a driver side and a passenger side, and wherein the seat can slide in a y direction, from the driver side to the passenger side.

Embodiment 32: The vehicle of any of Embodiments 22 - 24, comprising a plurality of seats, and wherein the seats can slide in an x direction and a y direction such that the seats can be stacked behind a driver seat.

Embodiment 33: A method of arranging seating in a vehicle, comprising: sliding an arm of the seat of any of Embodiments 1 - 21 horizontally along a slot in a roof rail.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments, the scope of the invention being defined by the appended claims.

## Claims

1. A vehicle seat (2), comprising:
a base (6) including a base safety feature (18) comprising a braking mechanism that creates friction as the seat (2) moves during an impact;
a back (8) connected to the base (6);
an arm (4) extending from the back (8);
**characterized in that**
the arm (4) is configured to attach to a roof rail (32) of a vehicle; and **in that** other than safety features that engage during an impact, the base (6) is free of connections that permanently anchor the seat (2) to a vehicle chassis.

2. The seat of Claim 1, wherein the base (6) and the back (8) are connected with a hinge (12) and/or the arm (4) and the back (8) are connected with a hinge (14).

3. The seat of any of the preceding claims, wherein the base safety feature (18) includes an actuation member, wherein the actuation member is a telescopic arm.

4. The seat of any of the preceding claims, further comprising a base safety feature (18) configured to transfer energy from the seat to the chassis of the vehicle during an impact.

5. The seat of any of the preceding claims, further comprising an arm safety feature (20) that
provides controlled deceleration of the seat during impact; and/or
controls the speed of the seat movement during an impact; and/or
transfers energy from the seat to the roof rails of the vehicle during an impact.

6. The seat of any of the preceding claims, further comprising at least one of
a seat belt (32), wherein the seat belt (32) comprises at least one of a shoulder and lap belt, a harness, and a convertible seat belt that is convertible from a shoulder and lap belt to a harness; and
an airbag (22), wherein the airbag is located in at least one of the back and the base of the seat, wherein the airbag (22) is located to protect passengers seated behind the seat (2).

7. The seat of any of the preceding claims, further comprising a support (30), wherein the support (30) is adjustable to enlarge or narrow the width of the seat back.

8. The seat of any of the preceding claims, wherein at least one of the back (8) and the base (6) are adjustable enabling them to be adjusted depending upon the size of the occupant; and/or wherein the arm (4) has an adjustable length.

9. A vehicle, comprising:
a steering column;
an engine;
a roof comprising a rail (32); and
a passenger compartment, wherein the passenger compartment comprises the seat (2) of any of the preceding claims, wherein the arm (4) is attached to the rail.

10. The vehicle of Claim 9, wherein the seat (2) can pivot around a vertical axis, wherein the seat (2) can be swiveled around a connection between the arm (4) and the roof rail (32).

11. The vehicle of any of Claims 9 - 10, wherein the roof rails include main rails (32) that extend from the front to the back of the vehicle, and cross rails (36) that extend between the main rails (32), wherein the cross rails (36) enable the seats (2) to slide sideways between the sides of the vehicle.

12. The vehicle of any of Claims 9 - 11, comprising a plurality of seats, and wherein the seats can be stacked.

13. The vehicle of any of Claims 9 - 12, wherein the arm (4) is removably attached to the rail (32) such that the seat (2) can be removed from the vehicle.

14. The vehicle of any of Claims 9 - 13, wherein the rail (32) comprises a slot (34).

15. A method of arranging seating in a vehicle, comprising: sliding an arm (4) of the seat (2) of any of Claims 1 - 8 horizontally along a slot (34) in at least one of a roof main rail (32) and a roof cross rail (36).

## Patentansprüche

1. Ein Fahrzeugsitz (2), umfassend:
eine Basis (6), enthaltend ein Basissicherheitselement (18), umfassend einen Bremsmechanismus, der Reibung erzeugt, wenn sich der Sitz (2) während eines Aufpralls bewegt;
eine mit der Basis (6) verbundene Rückenlehne (8);
einen sich von der Rückenlehne (8) erstreckenden Arm (4);
**dadurch gekennzeichnet, dass** der Arm (4) zum Befestigen an einer Dachschiene (32) eines Fahrzeugs eingerichtet ist; und dadurch, dass die Basis (6) mit Ausnahme von Sicherheitselementen, die während eines Aufpralls auslösen, frei von Verbindungen ist, die den Sitz (2) permanent an einem Fahrzeugrahmen verankern.

2. Der Sitz aus Anspruch 1, wobei die Basis (6) und die Rückenlehne (8) mit einem Drehgelenk (12) verbunden sind und/oder der Arm (4) und die Rückenlehne (8) mit einem Drehgelenk (14) verbunden sind.

3. Der Sitz aus einem der vorhergehenden Ansprüche, wobei das Basissicherheitselement (18) ein Betätigungselement enthält, wobei das Betätigungselement ein Teleskoparm ist.

4. Der Sitz aus einem der vorhergehenden Ansprüche, weiter umfassend ein Basissicherheitselement (18), welches dazu eingerichtet ist, während eines Aufpralls Energie vom Sitz zum Rahmen zu übertragen.

5. Der Sitz aus einem der vorhergehenden Ansprüche, weiter umfassend ein Armsicherheitselement (20) welches während Aufpralls kontrollierte Verlangsamung des Sitzes zur Verfügung stellt; und/oder während eines Aufpralls die Geschwindigkeit der Sitzbewegung steuert; und/oder während eines Aufpralls Energie vom Sitz zu den Dachschienen des Fahrzeugs überträgt.

6. Der Sitz aus einem der vorhergehenden Ansprüche, weiter umfassend wenigstens einen Sitzgurt (32), wobei der Sitzgurt (32) wenigstens einen Schulter- und Beckengurt, ein Geschirr und/oder einen umrüstbaren Sitzgurt, welcher von einem Schulter- und Beckengurt zu einem Geschirr umrüstbar ist, umfasst; und/oder einen Airbag (22), wobei sich der Airbag (22) in der Rückenlehne und/oder der Basis des Sitzes befindet, wobei der Airbag (22) angeordnet ist, um Passagiere zu schützen, die hinter dem Sitz (2) sitzen.

7. Der Sitz aus einem der vorhergehenden Ansprüche, weiter umfassend einen Träger (30), wobei der Träger (30) einstellbar ist, um die Breite der Sitz-Rückenlehne zu vergrößern oder zu verschmälern.

8. Der Sitz aus einem der vorhergehenden Ansprüche, wobei die Rückenlehne (8) und/oder die Basis (6) einstellbar sind, um sie in Abhängigkeit der Größe des Insassen einzustellen; und/oder wobei der Arm (4) eine einstellbare Länge hat.

9. Ein Fahrzeug, umfassend:
eine Lenksäule; einen Motor; ein Dach mit einer Schiene (32); und einen Fahrgastraum, wobei der Fahrgastraum den Sitz (2) aus einem der vorhergehenden Ansprüche umfasst, wobei der Arm (4) an der Schiene befestigt ist.

10. Das Fahrzeug aus Anspruch 9, wobei der Sitz (2) sich um eine vertikale Achse schwenken kann, wobei der Sitz (2) sich um eine Verbindung zwischen dem Arm (4) und der Dachschiene (32) drehen kann.

11. Das Fahrzeug aus einem der Ansprüche 9 - 10, wobei die Dachschienen Hauptschienen (32), die sich von der Vorderseite zur Rückseite des Fahrzeugs erstrecken, und Querschienen (36), die sich zwischen den Hauptschienen (32) erstrecken, enthalten, wobei die Querschienen (36) den Sitzen (2) ermöglichen, seitwärts zwischen den Seiten des Fahrzeugs zu gleiten.

12. Das Fahrzeug aus einem der Ansprüche 9 - 11, umfassend eine Vielzahl von Sitzen, und wobei die Sitze geschichtet werden können.

13. Das Fahrzeug aus einem der Ansprüche 9 - 12, wobei der Arm (4) lösbar an der Schiene (32) befestigt ist, sodass der Sitz (2) aus dem Fahrzeug entfernt werden kann.

14. Das Fahrzeug aus einem der Ansprüche 9 - 13, wobei die Schiene (32) einen Schlitz (34) umfasst.

15. Ein Verfahren zum Anordnen von Sitzen in einem Fahrzeug, umfassend: Gleiten eines Arms (4) des Sitzes (2) aus einem der Ansprüche 1 - 8 horizontal entlang eines Schlitzes (34) in wenigstens einer Dach-Hauptschiene (32) und/oder einer Dach-Querschiene (36).

## Revendications

1. Siège de véhicule (2) comprenant :
une base (6) comprenant un élément de sécurité de base (18) comprenant un mécanisme de freinage qui crée une friction lorsque le siège (2) se déplace lors d'un impact ;
un dossier (8) connecté à la base (6) ;
un bras (4) s'étendant à partir du dossier (8) ;
**caractérisé en ce que** :
le bras (4) est configuré pour se fixer à un rail de toit (32) d'un véhicule ; et **en ce que**
autre que des éléments de sécurité qui se mettent en prise pendant un impact, la base (6) est dépourvue de connections qui ancrent de manière permanente le siège (2) à un châssis de véhicule.

2. Siège selon la revendication 1, dans lequel la base (6) et le dossier (8) sont connectés avec une charnière (12) et/ou le bras (4) et le dossier (8) sont connectés avec une charnière (14).

3. Siège selon l'une quelconque des revendications précédentes, dans lequel l'élément de sécurité de base (18) comprend un élément d'actionnement, dans lequel l'élément d'actionnement est un bras télescopique.

4. Siège selon l'une quelconque des revendications précédentes, comprenant en outre un élément de sécurité de base (18) configurée pour transférer l'énergie du siège au châssis du véhicule lors d'un impact.

5. Siège selon l'une quelconque des revendications précédentes, comprenant en outre un élément de sécurité de bras (20) qui :
fournit une décélération contrôlée du siège lors d'un impact ; et/ou
contrôle la vitesse du mouvement de siège lors d'un impact ; et/ou
transfère l'énergie du siège aux rails de toit du véhicule lors d'un impact.

6. Siège selon l'une quelconque des revendications précédentes, comprenant en outre au moins l'un parmi :
une ceinture de sécurité (32), dans lequel la ceinture de sécurité (32) comprend au moins l'un parmi une ceinture d'épaule et ventrale, un harnais et une ceinture de sécurité convertible qui est convertible d'une ceinture d'épaule et ventrale en un harnais ; et
un airbag (22), dans lequel l'airbag est positionné dans au moins l'un parmi le dossier et la base du siège, dans lequel l'airbag (22) est positionné pour protéger des passagers assis derrière le siège (2).

7. Siège selon l'une quelconque des revendications précédentes, comprenant en outre un support (30), dans lequel le support (30) est ajustable pour agrandir ou rétrécir la largeur du dossier de siège.

8. Siège selon l'une quelconque des revendications précédentes, dans lequel au moins l'un parmi le dossier (8) et la base (6) sont ajustables, leur permettant d'être ajustés en fonction de la taille de l'occupant ; et/ou dans lequel le bras (4) a une longueur ajustable.

9. Véhicule comprenant :
une colonne de direction ;
un moteur ;
un toit comprenant un rail (32) ; et
un compartiment de passagers, dans lequel le compartiment de passagers comprend le siège (2) selon l'une quelconque des revendications précédentes, dans lequel le bras (4) est fixé au rail.

10. Véhicule selon la revendication 9, dans lequel le siège (2) peut pivoter autour d'un axe vertical, dans lequel le siège (2) peut être pivoté autour d'une connexion entre le bras (4) et le rail de toit (32).

11. Véhicule selon l'une quelconque des revendications 9 à 10, dans lequel les rails de toit comprennent des rails principaux (32) qui s'étendent de l'avant vers l'arrière du véhicule, et des rails transversaux (36) qui s'étendent entre les rails principaux (32), dans lequel les rails transversaux (36) permettent aux sièges (2) de coulisser latéralement entre les côtés du véhicule.

12. Véhicule selon l'une quelconque des revendications 9 à 11, comprenant une pluralité de sièges, et dans lequel les sièges peuvent être empilés.

13. Véhicule selon l'une quelconque des revendications 9 à 12, dans lequel le bras (4) est fixé de manière amovible au rail (32) de sorte que le siège (2) peut être retiré du véhicule.

14. Véhicule selon l'une quelconque des revendications 9 à 13, dans lequel le rail (32) comprend une fente (34).

15. Méthode pour agencer un siège dans un véhicule comprenant : le coulissement d'un bras (4) du siège (2) selon l'une quelconque des revendications 1 à 8 horizontalement le long d'une fente (34) dans au moins l'un parmi un rail principal de toit (32) et un rail transversal de toit (36).
